Europäisches Patentamt

European Patent Office

Office européen des brevets

(19)

(11) Veröffentlichungsnummer: **0 052 666**
**A1**

(12) # EUROPÄISCHE PATENTANMELDUNG

(21) Anmeldenummer: 80107308.1

(22) Anmeldetag: 24.11.80

(51) Int. Cl.³: **A 61 C 19/00**
**H 05 B 6/02, H 05 B 6/10**

(43) Veröffentlichungstag der Anmeldung:
02.06.82 Patentblatt 82/22

(84) Benannte Vertragsstaaten:
AT BE CH FR GB IT LI LU NL SE

(71) Anmelder: Gunst, Eveline
Blumenauerstrasse 42
D-3050 Wunstorf 1(DE)

(72) Erfinder:
Die Erfinder haben auf ihre Nennung verzichtet

(74) Vertreter: Springstubbe, Wolf, Dipl.-Ing.
Parkstrasse 15
D-8035 Gauting 1(DE)

(54) Vorrichtung zur Erwärmung von metallenen medizintechnischen Werkzeugen.

(57) Die Erfindung bezieht sich auf eine Vorrichtung zur Erwärmung von metallenen medizintechnischen, insbesondere dentaltechnischen Werkzeugen und/oder Hilfsgeräten. In dieser als Tischgerät ausbildbaren Vorrichtung bildet eine eigen- und berührungssicher ausgestaltete Spule (L) zur Erzeugung eines elektromagnetischen Wechselfeldes mit dem von ihr umschlossenen, beidseitig offenen Raum (A) einen Aufnahmeraum für das induktiv zu erwärmende medizintechnische Instrument. Das Spulengehäuse (H) ist an einem kugelförmigen Hohlkörper (K) befestigt, der auf einem hohlzylinderförmigen Sockel (Z) gleitend aufliegt; der kugelförmige Körper (K) ist schwenkbar an einem Bügel (B) angelenkt, der in zwei einander gegenüber liegenden Ausnehmungen (U) im oberen Bereich des Sockels (Z) gleitend gelagert ist. Der kugelförmige Hohlkörper (K) enthält zugleich den Wechselstromgenerator und ein Warmluftgebläse (W).

FIG 1

Eveline Gunst                                    2012

Vorrichtung zur Erwärmung von metallenen medizintechnischen Werkzeugen
_____

Die Erfindung bezieht sich auf die Erwärmung von metallenen medizintechnischen Werkzeugen und/oder Hilfsgeräten, insbesondere von solchen, wie sie in der Dentaltechnik beispielsweise als sog. Wachsbestecke zum
Aufschmelzen und Formen von Wachsen und/oder anderen
thermoplastischen Materialien verwendet werden. Solche
sog. Wachsarbeiten nehmen in der Dentaltechnik einen
breiten Raum ein: Im Zusammenhang mit Anpassungs-,
Kronen- und Brückenarbeiten, mit Prothetik und Modellguß werden stets Dentalwachse zum Modellieren, Kleben,
Sockeln, Abdecken usw. verwendet. Um die Wachse verarbeiten und formen zu können, müssen sie erwärmt,
geschmolzen und/oder mit erwärmten Instrumenten bearbeitet werden.

Zur Erwärmung solcher medizintechnischer Geräte ist
seit Jahrzehnten die Verwendung von gasbetriebenen
Bunsenbrennern üblich, deren Flamme das zu erwärmende
medizintechnische Werkzeug bzw. Gerät ausgesetzt wird.
Solchen Gasbrennern haftet indessen, ganz abgesehen von
den in der Gaszuleitung und in der offenen Flamme liegenden Gefahrenmomenten, eine Reihe von Nachteilen an:
So ist mit der Verwendung von Gasbrennern zur Erwärmung
von medizintechnischen Werkzeugen ein relativ geringer
Wirkungsgrad verbunden, was einerseits Energieverluste
und andererseits längere Arbeitszeiten mit sich bringt und des weiteren eine oftmals unerwünschte Erwärmung des Arbeitsraumes zur Folge hat, insbesondere dann, wenn darin eine Vielzahl von Menschen mit einer entsprechenden Vielzahl von Bunsenbrennern tätig ist. Besonders nachteilig ist, daß einerseits der Raumluft in hohem Maße Sauerstoff entzogen wird und andererseits die Raumluft mit Verbrennungsprodukten wie $CO_2$, $CH_4$, $H_2O$ und Verbrennungsrückständen aus Gasverunreinigungen angereichert wird, was sich ebenso wie das vom Gasstrom erzeugte Geräusch nachteilig auf Gesundheit, Wohlbefinden und Arbeitsintensität des Menschen auswirkt. An diesen Nachteilen wird durch ein mechanisch oder fotoelektrisch bewirktes Umschalten zwischen voller Arbeitsflamme während eines Erwärmungsvorganges und kleiner Zündflamme während des nachfolgenden eigentlichen Bearbeitungsvorganges allenfalls quantitativ, nicht aber qualitativ etwas geändert. Versucht man, die mit der Verwendung von Bunsenbrennern verbundenen Nachteile durch elektrische Widerstandsheizung der zu erwärmenden Geräte selbst zu vermeiden, so handelt man sich damit andere Nachteile ein: Die thermostatgeregelten Geräte weisen konstante Temperaturen auf, was beispielsweise bei Wachsarbeiten das Anschmelzen oder Glätten der Wachse erschwert; die elektrische Anschlußleitung beeinträchtigt die freie Handhabung der Geräte, was oftmals auf psychische Widerstände der Benutzer stößt - ganz abgesehen davon, daß diese ihre gewohnten Arbeitsgerätschaften nicht weiterverwenden können.

Der Erfindung liegt nun die Aufgabe zugrunde, Mängel und Nachteile, wie sie mit den vorstehend umrissenen Methoden verbunden sind, zu vermeiden und stattdessen eine Vorrichtung zur Erwärmung medizintechnischer Werkzeuge anzugeben, die demgegenüber wesentlich vorteilhafter ist.

Bei einer Vorrichtung zur Erwärmung von metallenen medizintechnischen, insbesondere dentaltechnischen Werkzeugen und/oder Hilfsgeräten wird dies erfindungsgemäß durch eine eigen- und berührungssicher ausgestaltete, mit dem von ihr umschlossenen, im wesentlichen zylindrischen, beidseitig offenen Raum einen Aufnahmeraum für das induktiv zu erwärmende medizintechnische Werkzeug bzw. Hilfsgerät bildende Spule zur Erzeugung eines magnetischen Wechselfeldes erreicht.

Die Erfindung bringt neben dem Vorteil, daß der Benutzer sein gewohntes Arbeitsbesteck weiter verwenden kann, besonders den weiteren Vorteil mit sich, daß die mit der Benutzung von Brenngasen verbundene Arbeitsraum- bzw. Umweltbelastung vermieden wird. Zugleich kann der Benutzer die Vorrichtung ständig in seinem unmittelbaren Arbeitsbereich an einer festen Position belassen, was eine optimale Anpassung an die Bewegungsabläufe des Benutzers ermöglicht; dabei wird aufgrund der Berührungs- und Eigensicherheit der Spule auch eine Gefährdung des Benutzers etwa aufgrund von unmittelbaren körperlichen Berührungen oder von mittelbaren Berührungen über das zu erwärmende Werkzeug vermieden. Dazu kann in weiterer Ausgestaltung der Erfindung die Spule in einem Gehäuse vergossen und gekapselt sein und/oder es kann die Spule an den Grenzflächen des Aufnahmeraumes mit einer einseitig an Masse liegenden Schutzwicklung versehen sein; des weiteren kann die Spule mit einem Thermoschalter versehen sein.

Vorteilhafterweise sind in weiterer Ausgestaltung der Erfindung in den Aufnahmeraum ferromagnetische Bereiche einer zumindest teilweise aus ferromagnetischem Material mit dem Schmelzpunkt von Dentalwachsen entsprechendem Curie-Punkt bestehenden Dentalwachs- Schmelz- und
Tropfvorrichtung einbringbar, was (gewissermaßen unter
kinematischer Umordnung von Wachs und Wachsbesteck)
auch ein Aufschmelzen und Auftropfen großer Wachsquantitäten ermöglicht. Dabei kann das ferromagnetische Material als Kern in der Schmelz- und Tropfvorrichtung
eingebettet sein; es kann aber auch das ferromagnetische
Material an der Oberfläche der Schmelz- und Tropfeinrichtung angebracht sein.

Das Spulengehäuse kann in weiterer Ausgestaltung der
Erfindung an der Vorrichtung verstellbar angeordnet
sein.

Zweckmäßig ist es, das Spulengehäuse an einem zumindest
in seinen wesentlichen Teilen kugelförmigen Körper zu
befestigen; dabei ist es von besonderem Vorteil, den
kugelförmigen Körper kardanisch zu lagern, was wesentlich zur weiteren optimalen Anpassung der Vorrichtung
an die ergonomischen Erfordernisse und Bewegungsabläufe
des Benutzers beiträgt. Dazu kann in weiterer Ausgestaltung der Erfindung der auf einem hohlzylinderförmigen
Sockel/aufliegende kugelförmige Körper an einem Bügel
gleitend
um eine erste Achse schwenkbar angelenkt sein, der in
zwei einander gegenüberliegenden Ausnehmungen im oberen
Bereich des Sockels gleitend gelagert ist; dies ermöglicht eine relativ wenig aufwendige Herstellung der Vorrichtung.

Der kugelförmige Körper kann zugleich das Gehäuse für
den die Spule speisenden Wechselstromgenerator bilden;
des weiteren kann in dem kugelförmigen Körper auch ein
Warmluftgebläse integriert sein.

Alternativ zu einer solchen Ausgestaltung der Vorrichtung kann in Weiterbildung der Erfindung aber auch das Spulengehäuse auf einem Grundsockel montiert und die Spule mit einem davon getrennt untergebrachten Wechselstromgenerator leitend verbunden sein, wobei vorteilhafterweise auch die Spulen mehrerer Spulengehäuse mit ein- und demselben, davon getrennt untergebrachten Wechselstromgenerator leitend verbunden sein können.

Anhand der Zeichnung   sei die Erfindung noch näher erläutert. Dabei zeigt:

FIG 1     ein Ausführungsbeispiel für eine Vorrichtung gemäß der Erfindung;

FIG 2   und
FIG 3   verdeutlichen, wie in diese Vorrichtung eine Schmelz- und Tropfvorrichtung einbringbar ist.

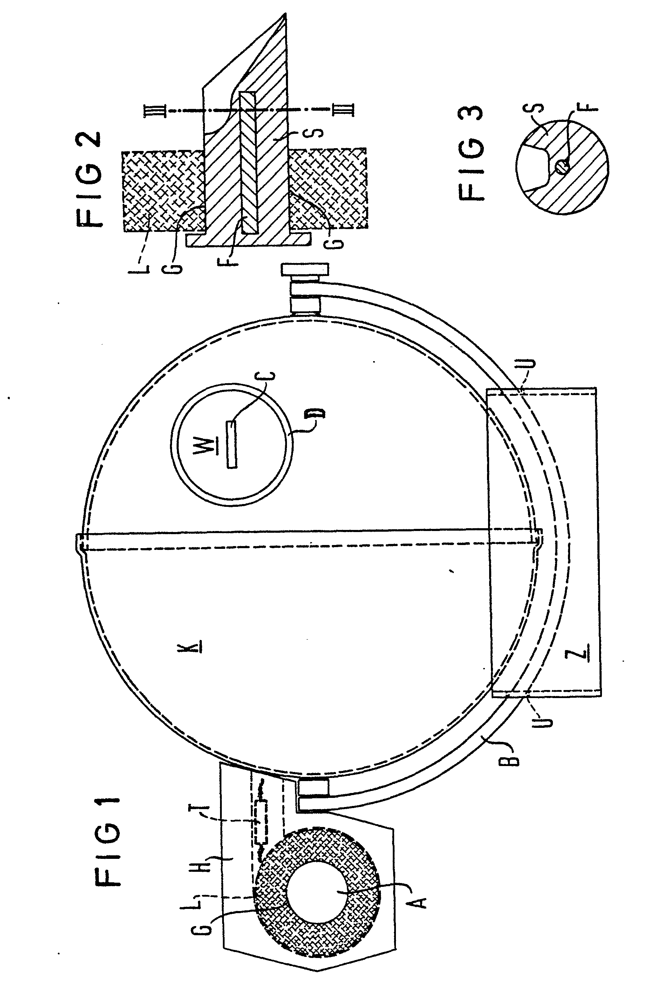

In der Zeichnung FIG 1   ist schematisch in einem zum Verständnis der Erfindung erforderlichen Umfange in Art einer Seitenansicht eine als Tischgerät ausgebildete Vorrichtung gemäß der Erfindung dargestellt, bei der ein Spulengehäuse H   an einem kugelförmigen Körper K befestigt ist. In dem Spulengehäuse H   möge, wie dies auch in FIG 1   angedeutet ist, eine eigen- und berührungssicher ausgebildete Spule L   vergossen und gekapselt sein, die mit dem von ihr umschlossenen, im wesentlichen zylindrischen, beidseitig offenen Raum A einen Aufnahmeraum für das induktiv zu erwärmende medizintechnische Werkzeug bzw. Hilfsgerät bildet; der Aufnahmeraum A   kann dabei beispielsweise eine Tiefe von 20 mm   und einen Durchmesser von 20 mm   aufweisen. Ohne daß dies in FIG 1   im einzelnen dargestellt ist, möge die Spule an den Grenzflächen G   des Aufnahmeraumes A   mit einer einseitig an Masse liegenden Schutzwicklung versehen sein; außerdem möge,

- 6 -                    2012

wie dies auch in FIG 1  angedeutet ist, die Spule L
mit einem Thermoschalter T versehen sein.

Die Spule L  möge von einem in FIG 1  nicht weiter
dargestellten, ggf. am Netz betreibbaren Mittelfrequenz-
Wechselstromgenerator, der im Inneren des kugelförmigen
Körpers K  untergebracht sein kann, gespeist werden, so
daß sie in dem von ihr umschlossenen Aufnahmeraum A
ein entsprechend starkes magnetisches Wechselfeld erzeugt. Wird dann ein (dadurch elektromagnetisch erregbares) metallenes medizintechnisches Werkzeug, wie
z.B. ein Dentalwachsmesser, in den Aufnahmeraum A  eingebracht, so wird das Werkzeug unter Einfluß des in ihm
induzierten Stromes entsprechend erwärmt und kann anschließend bestimmungsgemäß benutzt werden.

Anstelle eines solchen Werkzeuges mögen auch ferromagnetische Bereiche einer zumindest teilweise aus ferromagnetischem Material bestehenden Dentalwachs-Schmelz-
und Tropfvorrichtung in den Aufnahmeraum A einbringbar
sein. Hierzu sei ein Blick auf FIG 2  geworfen, die
diese Einbringbarkeit einer solchen Schmelz- und Tropfvorrichtung verdeutlicht. In FIG 2  ist die das magnetische Wechselfeld erzeugende Spule wiederum mit L  bezeichnet; die den Aufnahmeraum begrenzenden Grenzflächen
sind wiederum mit G  bezeichnet. In den hierdurch begrenzten Aufnahmeraum ist die in FIG 2  in Schnittdarstellung gezeigte Schmelz- und Tropfvorrichtung S  eingebracht, wobei das ferromagnetische Material als Kern
F  in der Schmelz- und Tropfvorrichtung S  eingebettet
ist. Dieses ferromagnetische Material F  weist zweckmäßigerweise einen dem Schmelzpunkt von Dentalwachsen
entsprechenden Curie-Punkt auf, so daß eine darüber
hinausgehende, ggf. gefahrbringende Überhitzung des
Dentalwachses vermieden wird. Wie eingangs schon erwähnt wurde, kann sich alternativ das ferromagnetische
Material auch an der Oberfläche der Schmelz- und Tropfeinrichtung S befinden, ohne daß dies jedoch noch
zeichnerisch dargestellt wäre. Die Darstellung in FIG 2
wird noch deutlicher durch die ergänzende FIG 3, die
einen Querschnitt längs der Linie III-III (in FIG 2) zeigt.

Um nun auf FIG 1 zurückzukommen, so ist der kugelförmige Körper K seinerseits kardanisch gelagert, und
zwar in der Weise, daß der auf einem hohlzylinderförmigen Sockel Z gleitend aufliegende kugelförmige Körper K
an einem Bügel B um eine erste Achse schwenkbar angelenkt ist; der Bügel B ist seinerseits in zwei einander
gegenüberliegenden Ausnehmungen U im oberen Bereich des
Sockels Z gleitend gelagert. Dabei kann bei einem beispielsweise in der Größenordnung von 150 mm liegenden
Kugeldurchmesser der Sockel Z einen Durchmesser von
100 mm und eine Höhe von 35 mm aufweisen.

Des weiteren ist in FIG 1 noch angedeutet, daß in dem
als Hohlkugel ausgebildeten kugelförmigen Körper K ein
                                 einen
Warmluftgebläse W mit einer/etwa zylinderförmigen (gewissermaßen aus der Zeichenebene heraustretenden) Luftführungsteil D abschließenden Luftaustrittsöffnung C
integriert ist. Ein solches Warmluftgebläse W ermöglicht ein Erweichen und Glätten größerer Wachsflächen,
was hier jedoch nicht weiter verfolgt zu werden braucht,
da dies zum Verständnis der Erfindung nicht erforderlich
ist.

Abschließend sei noch bemerkt, daß die Erfindung nicht
an die Erwärmung von einer Dentalwachsbehandlung dienenden medizintechnischen Geräten gebunden ist, sondern
beispielsweise auch zur Erwärmung anderer medizintechnischer Instrumente, beispielsweise der Chirurgie, Anwendung finden kann. Des weiteren ist die Erfindung
auch nicht auf das vorstehend anhand der Zeichnung
beschriebene Ausführungsbeispiel beschränkt; alter-

2012

nativ dazu kann das Spulengehäuse beispielsweise auch
auf einem Grundsockel montiert sein, wobei die Spule
mit einem davon getrennt untergebrachten Wechselstromgenerator leitend verbunden ist; dabei können auch die
Spulen mehrerer Spulengehäuse mit ein- und demselben,
davon getrennt untergebrachten Wechselstromgenerator
leitend verbunden sein.

<u>Patentansprüche</u>

1. Vorrichtung zur Erwärmung von metallenen medizintechnischen, insbesondere dentaltechnischen Werkzeugen und/oder Hilfsgeräten, g e k e n n z e i c h n e t durch eine eigen- und berührungssicher ausgestaltete, mit dem von ihr umschlossenen, im wesentlichen zylindrischen, beidseitig offenen Raum (A) einen Aufnahmeraum für das induktiv zu erwärmende medizintechnische Werkzeug bzw. Hilfsgerät (S) bildende Spule (L) zur Erzeugung eines magnetischen Wechselfeldes.

2. Vorrichtung nach Anspruch 1, d a d u r c h   g e -k e n n z e i c h n e t , daß die Spule (L) in einem Gehäuse (H) vergossen und gekapselt ist.

3. Vorrichtung nach Anspruch 1 oder 2, d a d u r c h g e k e n n z e i c h n e t , daß die Spule an den Grenzflächen (G) des Aufnahmeraumes (A) mit einer einseitig an Masse liegenden Schutzwicklung versehen ist.

4. Vorrichtung nach einem der Ansprüche 1 bis 3, d a -d u r c h   g e k e n n z e i c h n e t , daß die Spule (L) mit einem Thermoschalter (T) versehen ist.

5. Vorrichtung nach einem der vorhergehenden Ansprüche, d a d u r c h   g e k e n n z e i c h n e t , daß in den Aufnahmeraum (A) ferromagnetische Bereiche (F) einer zumindest teilweise aus ferromagnetischem Material (F) mit dem Schmelzpunkt von Dentalwachsen entsprechendem Curie-Punkt bestehenden Dentalwachs-Schmelz- und Tropfvorrichtung (S) einbringbar sind.

6. Vorrichtung nach Anspruch 5, d a d u r c h   g e -k e n n z e i c h n e t , daß das ferromagnetische Ma-terial als Kern (F) in der Schmelz- und Tropfvorrichtung (S) eingebettet ist.

7. Vorrichtung nach Anspruch 5, d a d u r c h  g e -
k e n n z e i c h n e t , daß das ferromagnetische Material an der Oberfläche der Schmelz- und Tropfeinrichtung angebracht ist.

8. Vorrichtung nach einem der vorhergehenden Ansprüche,
d a d u r c h  g e k e n n z e i c h n e t , daß das
Spulengehäuse an der Vorrichtung verstellbar angeordnet
ist.

9. Vorrichtung nach einem der Ansprüche 1 bis 7, d a -
d u r c h  g e k e n n z e i c h n e t , daß das
Spulengehäuse (H) an einem zumindest in seinen wesentlichen Teilen kugelförmigen Körper (K) befestigt ist.

10. Vorrichtung nach Anspruch 9, d a d u r c h  g e -
k e n n z e i c h n e t , daß der kugelförmige Körper
(K) kardanisch gelagert ist.

11. Vorrichtung nach Anspruch 10, d a d u r c h  g e -
k e n n z e i c h n e t , daß der auf einem hohlzylinderförmigen Sockel (Z) gleitend aufliegende kugelförmige Körper (K)
an einem Bügel (B) um eine erste Achse schwenkbar angelenkt ist, der in zwei einander gegenüberliegenden Ausnehmungen (U) im oberen Bereich des Sockels (Z) gleitend gelagert ist.

12. Vorrichtung nach einem der Ansprüche 9 bis 11, d a -
d u r c h  g e k e n n z e i c h n e t , daß der kugelförmige Körper (K) das Gehäuse für den Wechselstromgenerator bildet.

13. Vorrichtung nach einem der Ansprüche 9 bis 12, d a -

d u r c h   g e k e n n z e i c h n e t , daß in dem
kugelförmigen Körper (K) ein Warmluftgebläse (W) integriert ist.

14.   Vorrichtung nach einem der Ansprüche 1 bis 8,
d a d u r c h   g e k e n n z e i c h n e t , daß das
Spulengehäuse auf einem Grundsockel montiert und die
Spule mit einem davon getrennt untergebrachten Wechselstromgenerator leitend verbunden ist.

15.   Vorrichtung nach Anspruch 14,   d a d u r c h   g e -
k e n n z e i c h n e t , daß die Spulen mehrerer Spulengehäuse mit ein- und demselben davon getrennt untergebrachten Wechselstromgenerator leitend verbunden sind.

0052666

1/1

FIG 2

FIG 3

FIG 1

0052666

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 906 959 (ALLMÄNNA SVENSKA ELEKTRISKA AKTIEBOLAGET) <br> * Seite 1, Zeilen 1 bis 40 * <br> -- | 1 |
| | US - A - 4 082 936 (S. AOKI et al.) <br> * Fig. 2 * <br> -- | 1 |
| A | DE - B2 - 2 638 595 (W.C. HERAEUS GMBH) <br> -- | |
| A | FR - A - 1 229 009 (J.-R. HERRMANN et al.) et al.) <br> -- | |
| A | US - A - 2 511 192 (A.M. BARROSO) <br> ---- | |

**KLASSIFIKATION DER ANMELDUNG (Int. Cl.³)**

A 61 C 19/00
H 05 B 6/02
H 05 B 6/10

**RECHERCHIERTE SACHGEBIETE (Int. Cl.³)**

A 61 B 17/00
A 61 C 13/00
A 61 C 19/00
H 05 B 6/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 02-07-1981 | SIMON |

EPA form 1503.1 06.78